Europäisches Patentamt

(19) European Patent Office

Office européen des brevets

(11) Publication number: **0 282 060 B1**

# EUROPEAN PATENT SPECIFICATION

(12)

(45) Date of publication of patent specification:
20.02.91 Bulletin 91/08

(51) Int. Cl.⁵: **F16F 15/12**

(21) Application number: **88103820.2**

(22) Date of filing: **10.03.88**

(54) Torque variation absorbing device.

(30) Priority: **11.03.87 JP 35278/87 U**

(43) Date of publication of application:
**14.09.88 Bulletin 88/37**

(45) Publication of the grant of the patent:
**20.02.91 Bulletin 91/08**

(84) Designated Contracting States:
**DE FR GB**

(56) References cited:
**EP-A- 0 170 950
EP-A- 0 258 113
EP-A- 0 258 114
FR-A- 2 571 461**

(73) Proprietor: **AISIN SEIKI KABUSHIKI KAISHA
1, Asahi-machi 2-Chome
Kariya City Aichi Pref. (JP)**

(72) Inventor: **Kobayashi, Kiyonori
40-29, Sakura Aizuma-cho
Chiryu city Aichi pref. (JP)**
Inventor: **Kamiya, Masakazu
84-6, Minamiyama Shinden-cho
Toyoake city Aichi pref. (JP)**
Inventor: **Kagiyama, Junji
77-2, Jinden, Maebayashi-cho
Toyota city Aichi pref. (JP)**

(74) Representative: **Grams, Klaus Dieter,
Dipl.-Ing. et al
Patentanwaltsbüro Tiedtke-Bühling-Kinne-
Grupe-Pellmann-Grams-Struif Winter-Roth
Bavariaring 4
D-8000 München 2 (DE)**

## Description

### Field of the Invention

This invention relates to a torque variation absorbing device which is used to take up and compensate for variations in torque fluctuations, and more particularly to a torque variation absorbing device which is installed on or connected to a crankshaft of an internal combustion engine to take up and compensate for torque fluctuations produced by operation of the internal combustion engine.

### DESCRIPTION OF PRIOR ART

A torque variation absorbing device according to the generic part of claim 1 is known from FR-A-257 146 1. In this structure both spring seats are identical in shape and provided with caoutchouc elements each. Althoug the force provided by said spring is sufficient during low torque transfer, the same is insufficient under an increased torque.

Another conventional torque variation absorbing device is disclosed, for example in Japanese patent application laid-open publication No. 59-200816 published on November 14, 1984, and Japanese application laid-open publication No. 61-52423 published on March 15, 1986. These conventional devices include a drive plate attached or connected to an output shaft of an engine crankshaft and a flywheel which is concentrically attached to the drive plate.

A spring mechanism and a hysteresis mechanism are located or positioned between the driving plate and the flywheel. In the conventional devices, the rotation of the engine crankshaft and the torque fluctuation are transmitted to the flywheel through the driving plate, the spring mechanism and the hysteresis mechanism, which comprise the torque variation absorbing device. Thus, the torque variation is absorbed by the variation absorbing device.

In the above conventional torque variation absorbing devices, however, spring mechanism is interposed between two spring seats. Each spring seat is firmly secured to a rubber or elastomeric element. The spring seats at both end of coil-type springs are identical in shape. This arrangement permits slip velocity of a slidable part, caused by centrifugal load and torque transmitting force, to be increased. The spring mechanism receives the centrifugal load and the torque transmitting force. A driven side spring seat is compressed more frequently between the driven side spring seat and a driven disk than a drive side spring seat and the driven disk.

In this prior art the driven side spring seat and a deformable portion are connected together as one body, and the weight of the driven side spring seat is heavy. When the device rotates in clockwise rotation, the driven side spring seat is in contact with the driven disk. The weight of the driven side spring seat is heavy, so the driven side spring seat receives large friction.

In order to overcome this problem, it is necessary to reduce the weight of the driven side spring seat.

### SUMMERY OF THE INVENTION

An object of the present invention is to decrease torque variation between a spring mechanism and a driven disk.

An essential object of the present invention is to decrease sliding friction loss of the driven side spring seat and to provide for a stepped spring constant.

The torque variation absorbing device comprises a driving plate, a spring mechanism, a flywheel, a hysteresis mechanism and a torque limiting mechanism. The driven disk is arranged on the center of the end face of the spring mechanism. The distance between the flange part of the driven disk and the centre of the end face of the spring seat is the sum of thickness of the spring seat plus substantially half of the thickness of the driven disk.

The drive side spring seat is constructed of a hard synthetic resin except a deformable portion which is constructed of an elastomeric element having a higher spring constant than said spring, while the driven side spring seat being constructed of a hard synthetic resin structure.

Other features and advantages of this invention will become apparent from the following description and the accompanying drawings.

### BRIEF DESCRIPTION OF THE DRAWINGS

FIGURE 1 is a fragmentary front elevational view, in partial section, of the device embodying this invention ;

FIGURE 2 is a sectional view taken substantially along the lines II-II of the FIGURE 1 ;

FIGURE 3 is a partial sectional view showing the part III of a torque limiting mechanism of the device of FIGURE 1 ;

FIGURE 4 is a partial sectional view showing the part IV of a hysteresis mechanism of the device of FIGURE 1 ;

FIGURE 5 is a fragmentary front elevational view, in partial section, of an alternate embodiment of the invention ; and

FIGURE 6 is a sectional view taken substantially along lines V-V in FIGURE 5.

### DETAILED DESCRIPTION OF THE PREFERRED EMBODIMENT

A torque variation absorbing device constituted in accordance with a preferred embodiment of the present invention will be described with reference to the drawings.

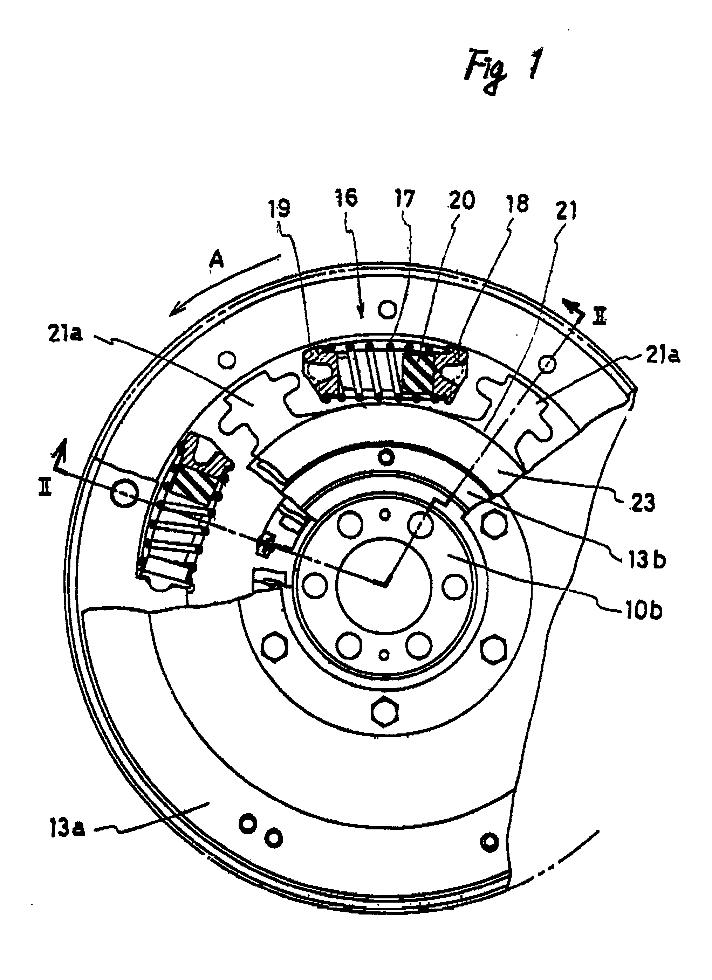

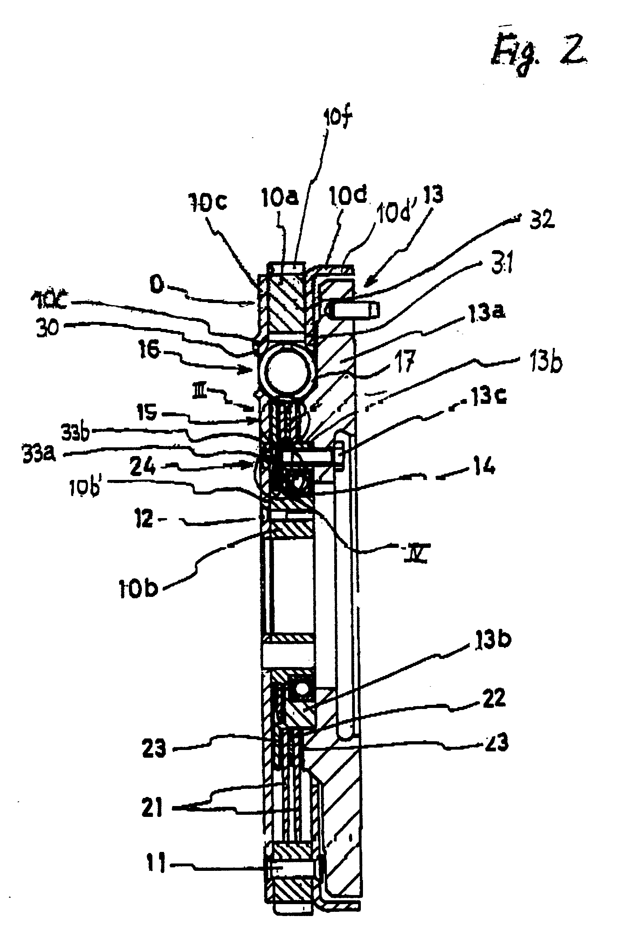

Referring first to FIGURES 1 and 2 of the drawings, a device embodying this invention includes a driving plate 10 which is connected to a driving shaft of an engine crankshaft (not illustrated), and the driving plate 10 and the driving shaft (not shown). The driving plate 10 comprises an outer body 10a shaped like a ring, an inner body 10b shaped like a ring, and steel side plates 10c and 10d which clamp the outer body 10a from both sides by a rivet 11. The inner body 10b is connected to the side plate 10c located on the driving shaft side by a screw 12. On the periphery of the outer body 10a, a ring gear 10f is shaped for accommodating the starting of an engine. On the periphery of the inner body 10b the projection 10b′ is formed jutting outwardly in the radial direction on the side of the side plate 10c which faces a driving shaft (not shown) of the engine crankshaft. Thus the periphery of the inner body 10b and the projection 10b′ together constitute a bearing guide for fitting a bearing 14. The projection receives a thrust force from the bearing 14 and thereby prevents the thrust force from acting in the side plate 10c. The side plate 10c has an opening 30 with a rim 10c′ and the side plate 10d has a recess 31 is bent outwardly in the axial direction and a spring mechanism 16 (vibration damping mechanism by a coil-type spring 17) discussed later is housed in the opening 30 and the recess 31. The rim 10c′ of the opening 30 and the recess 31 can be easily press-formed. Thus, the side plate 10c of the driving plate 10 is squeezed between the driving shaft (not shown) and the inner body 10b which constitute one part of the driving plate 10 and which is located close to a flywheel 13 has its periphery 10d′ bent in the L-letter fashion to surround the flywheel 16. The axially extending annular projection 10d′ of the bent portion covers a gap 32 which extends straight in the radial direction between the driving plate 10 and a flywheel body 13a.

Parallel to and coaxial with the driving plate 10, the flywheel 13 is rotatably positioned by the driving plate 10 by the bearing arrangement 14. The flywheel 13 is divided into the flywheel body 13a and a driven plate 13b so that it can house a torque limiting mechanism 15. The flywheel body 13a and the driven plate 13b are connected together by means of a bolt 13c. The spring mechanism 16 comprises the coil-type spring 17 with a drive side spring seat 18 and a driven side spring seat 19 provided at the both ends of the coil-type spring 17. The drive side spring seat 18 is constructed of a hard syntheric resin except a deformable portion 20. The driven side spring seat 19 is constructed of a hard syntheric resin, too. The deformable portion 20 is constructed of an elastomeric element and is deformable with a greater spring constant than the spring 17. For example, the elastomeric element comprises a rubber element. The drive side spring seat 18 and the deformable portion 20 comprise as one body. The driven side spring seat 19 does not include the deformable portion 20 constructed of an elastomeric element as rubber.

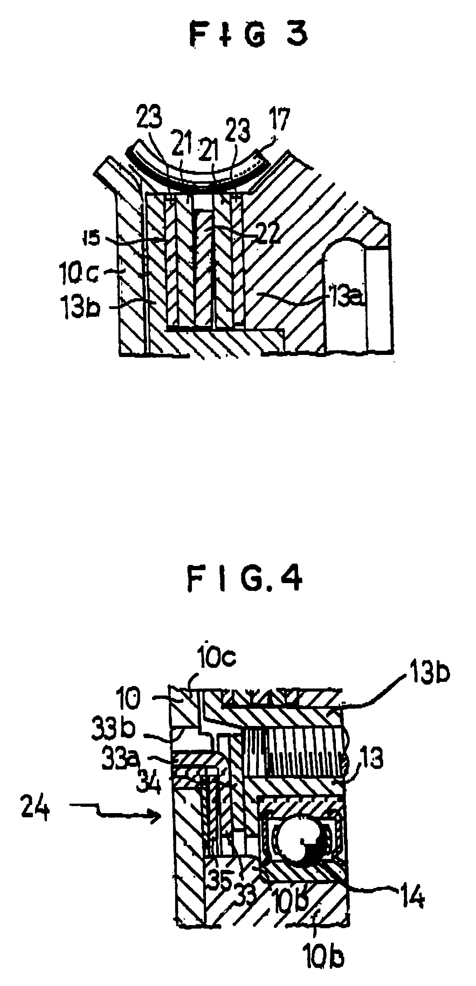

As seen from Fig. 4, a hysteresis mechanism 24 is located further radially inside the torque limiting mechanism 15 and between the driving plate 10 and the flywheel 13. In the hysteresis mechanism 24, a hysteresis plate 33 provided with a lining 34 of abrasive material is partially bent and a bent portion 33a is fitted into a hole 33b bored in the side plate 10c of the driving plate 10, thereby fixing circumferentially the hysteresis plate 33 to the driving plate 10 a cone spring 35 is installed between the hysteresis plate 33 and the side plate 10c, thereby pressing the lining 34 of the hysteresis plate 33 against the flywheel 13. The sliding friction between the lining 34 and the flywheel 13 produce a hysteresis.

As seen from Fig. 3, on the surface of the side of the annular portions of two driven disks 21 which contact the flywheel body 13a and the driven plate 13b are provided with two linings 23 of abrasive material which constitute elements of the torque limiting mechanism 15. An excessive torque can be cut by a slippage between the linings 23 and the flywheel body 13a. The thrust force of the driven plate 13b against the flywheel body 13a and the driven plate 13b depends upon the cone spring 22. When the torque is less than the frictional force which depends on this thrust force, the driven disks 21 and the flywheel 13 rotate together. When the torque exceeds the frictional force, a relative slippage takes place between the driven disks 21 and the flywheel 13, thereby releasing the portion of torque in excess of the frictional force.

In the above embodiment, the driving shaft of an engine rotates, the torque vibration absorbing device rotates clockwise as viewed in Fig. 1, and the torque variation absorbing device turns in the direction of arrow A. When the torque is small, the gap between the driven side spring seat 19 and a flange part 21a′ of the driven disk 21 and the low frictional force of the hysteresis mechanism 24 effectively act. Next, when the driven side spring seat 19 and a flange part 21a′ of the driven disk 21 come into contact, the spring 17 of the spring mechanism 16 deforms under an increased torque. When with the further increase of the torque, the spring 17 of the spring mechanism 16 deforms more largely to cause the deformable portion 20 of the drive side spring seat 18 and the driven side spring seat 19 to contact each other. When the torque exceeds a specified torque, a slip develops between the torque limiting mechanism 15 and the flywheel 13. In this way, the torque can be transmitted to the power train with its variations effectively absorbed. Another direction, during operation in an engine braking condition the drive side spring seat 18 and a flange part 21a of the driven disk 21 come into contact each other.

In the above operation, in an engine driving condition the driven side spring seat **19** slides a long distance in the opening **30** of the side plate **10c**. But the driven side spring seat **19** is of light weight so that the sliding friction loss is of small magnitude. In an engine braking operating condition, small torque will be generated. The drive side spring seat **18** slides a short distance in the opening **30** of the side plate **10c**. Sliding friction losses in this engine braking operating condition are also of small magnitude.

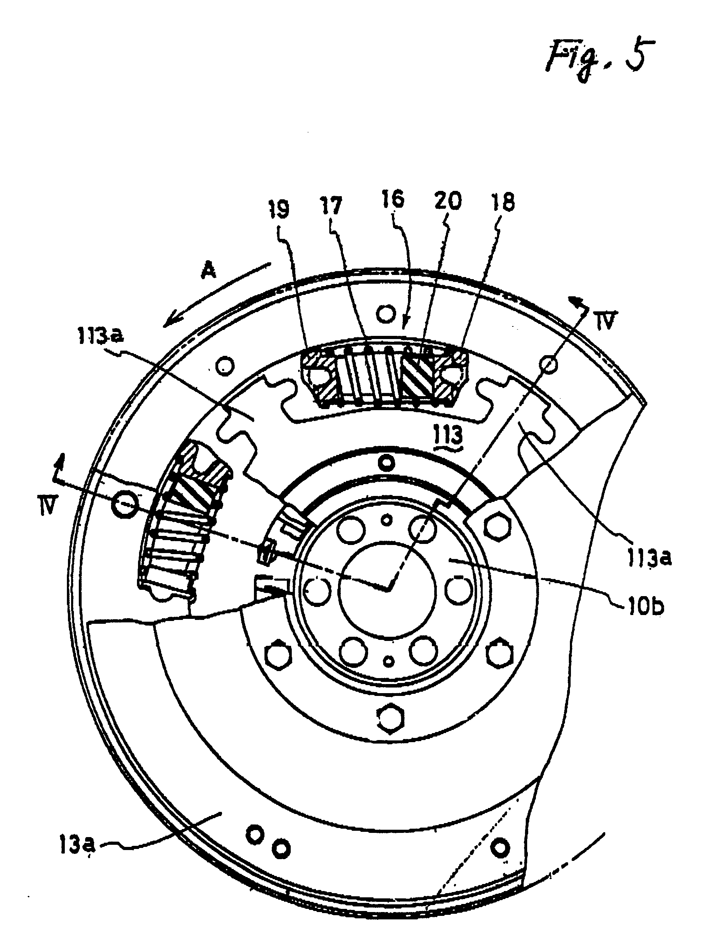

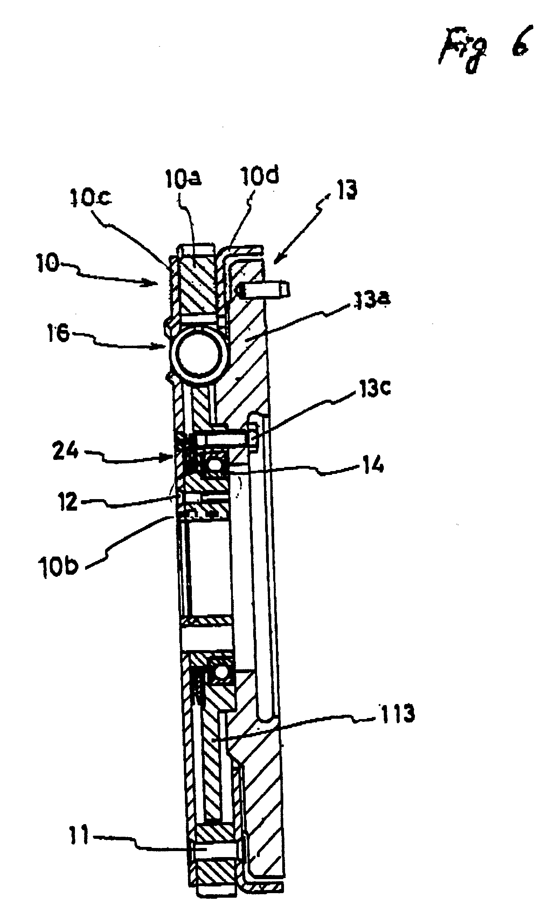

Reference is now to FIGURE 5 and 6 showing another embodiment of this invention.

In this embodiment of this invention, the torque limiting mechanism **15** is eliminated. The driven disk **21** and driven plate **13b** of figures 5 and 6 are incorporated therein. Other elements, identical to those in figures 5 and 6, are identified by identical reference numerals.

## Claims

1. A torque variation absorbing device comprising : a driving plate (10) connected to a driving shaft of an engine,
a flywheel (13) arranged coaxially with said driving plate (10) and rotatably supported via a bearing (14) on said driving plate (10),
a spring mechanism (16) operative to transfer torque between the driving plate (10) and the flywheel (13) via a torque limiting mechanism (15),
said torque limiting mechanism comprising elements (23) in frictional engagement with each other, and a hysteresis mechanism (24) operative between the driving plate and the flywheel to establish hysteresis in the relativ movements,
wherein the spring mechanism (16) comprises a coil spring (17) extending in the circumferential direction of the driving plate (10) and the flywheel (13) and a drive side spring seat (18) and a driven side spring seat (19) provided at both ends of the coil spring (17), characterized by :
the drive side spring seat (18) being constructed of a hard synthetic resin except a deformable portion (20) which is constructed of an elastomeric element having a higher spring constant than said spring (17), while the driven side spring seat (19) being constructed of a hard synthetic resin structure.

2. A torque variation absorbing device according to claim 1, characterized by said deformable portion (20) being constructed of rubber.

## Ansprüche

1. Vorrichtung zur Absorption einer Drehmomentänderung, die umfaßt :
eine mit einer Antriebswelle eines Motors verbundene treibende Platte (10),
ein koaxial zu dieser treibenden Platte (10) angeordnetes sowie über ein Lager (14) an der besagten treibenden Platte (10) gelagertes Schwungrad (13),
einen Federmechanismus (16), der zur Drehmomentübertragung zwischen der treibenden Platte (10) und dem Schwungrad (13) über einen Drehmoment-Begrenzungsmechanismus (15) wirksam ist,
wobei der erwähnte Drehmoment-Begrenzungsmechanismus in Reibschlußanlage miteinander befindliche Elemente (23) und einen Hysteresemechanismus (24), der zwischen der treibenden Platte und dem Schwungrad wirksam ist, um bei den Relativbewegungen eine Hysterese herbeizuführen, umfaßt, und
wobei der Federmechanismus (16) eine in der Umfangsrichtung der treibenden Platte (10) sowie des Schwungrades (13) sich erstreckende Schraubenfeder (17) und einen antriebsseitigen Federsitz (18) sowie einen abtriebsseitigen Federsitz (19), die an den beiden Enden der Schraubenfeder (17) angeordnet sind, enthält, dadurch gekennzeichnet, daß der antriebsseitige Federsitz (18) aus einem harten Kunstharz mit Ausnahme eines verformbaren Teils (20), welches aus einem elastomeren Element mit einer höheren Federkonstanten als die erwähnte Feder (17) gestaltet ist, gefertigt ist, während der abtriebsseitige Federsitz (19) aus einer harten Kunstharzstruktur hergestellt ist.

2. Vorrichtung zur Absorption einer Drehmomentänderung nach Anspruch 1, dadurch gekennzeichnet, daß das verformbare Teil (20) aus Gummi gefertigt ist.

## Revendications

1. Dispositif d'amortissement des variations de couple comprenant :
– une plaque d'entraînement (10) connectée à un arbre d'entraînement d'un moteur,
– un volant (13) disposé suivant le même axe que la plaque d'entraînement (10) et supporté en rotation via un roulement (14) sur la plaque d'entraînement (10),
– un mécanisme à ressort (16) pouvant fonctionner pour transférer un couple entre la plaque d'entraînement (10) et le volant (13) via un mécanisme (15) de limitation de couple,
– le mécanisme de limitation de couple comprenant des éléments (23) en contact par frottement les uns avec les autres, et un mécanisme d'hystérésis (24) pouvant fonctionner entre la plaque d'entraînement et le volant pour établir de l'hystérésis dans les mouvements relatifs, où le mécanisme à ressort (16) comprend un ressort en spirale (17) s'étendant dans la direction circonférentielle de la plaque d'entraînement (10) et du volant (13) et un siège (18) pour ressort du côté d'entraînement et un siège (19) pour ressort du côté mené prévus aux deux extrémités du ressort en spirale (17), caractérisé en ce que :

— le siège (18) pour ressort du côté d'entraînement est constitué d'une résine synthétique dure à l'exception d'une partie déformable (20) qui est réalisée en un élément en élastomère ayant une constante élastique supérieure à celle du ressort (17), alors que le siège (19) pour ressort du côté mené est constitué d'une structure de résine synthétique dure.

2. Dispositif d'amortissement des variations de couple selon la revendication 1, caractérisé en ce que la partie déformable (20) est en caoutchouc.

*Fig 1*

Fig. 2

# F I G 3

# F I G. 4

8

*Fig. 5*

Fig 6